# EUROPÄISCHE PATENTSCHRIFT

(11) **EP 2 313 456 B1**
(45) Veröffentlichungstag und Bekanntmachung des Hinweises auf die Patenterteilung: **30.01.2013**
(21) Anmeldenummer: 09777529.0
(22) Anmeldetag: 30.07.2009
(51) Int. Cl.: C08G 64/12, C08G 64/14, C08L 69/00

(54) **MODIFIZIERTE POLYCARBONATE MIT VERBESSERTEN OBERFLÄCHENEIGENSCHAFTEN**
MODIFIED POLYCARBONATES HAVING IMPROVED SURFACE PROPERTIES
POLYCARBONATES MODIFIÉS PRÉSENTANT DES PROPRIÉTÉS DE SURFACE AMÉLIORÉES

(30) Priorität: 05.08.2008 DE 102008036406
(43) Veröffentlichungstag der Anmeldung: 27.04.2011
(73) Patentinhaber: Bayer MaterialScience AG, 51368 Leverkusen (DE)
(72) Erfinder: MEYER, Alexander, 40489 Düsseldorf (DE); HEUER, Helmut-Werner, 47829 Krefeld (DE); OSER, Rafael, 47800 Krefeld (DE); WEHRMANN, Rolf, 47800 Krefeld (DE)
(74) Vertreter: BIP Patents
(86) Internationale Anmeldenummer: PCT/EP2009/005505
(87) Internationale Veröffentlichungsnummer: WO 2010/015354

(56) Entgegenhaltungen:
- DE-A1-102006 046 330
- US-A- 4 393 190
- US-A1- 2002 137 873
- US-B1- 6 309 785

## Beschreibung

Die vorliegende Erfindung betrifft die Verwendung von Imid-haltigen Arylmono- bzw. Aryldihydroxyverbindungen als Kettenabbrecher bzw. Monomerbausteine zur Herstellung von Polycarbonaten, sowie Polycarbonate enthaltend von Imid-haltigen Arylhydroxyverbindungen abgeleitete Strukturen, Verfahren zur Herstellung der Polycarbonate, Formkörper und Extrudate erhältlich aus diesen Polycarbonaten, sowie Verfahren zur Herstellung der Formkörper und Extrudate.

Polycarbonate werden aufgrund ihrer hohen Wärmeformbeständigkeit u. a. in Bereichen eingesetzt, in denen mit einer erhöhten Temperaturbelastung zu rechnen ist. Mit speziellen Copolycarbonaten (wie z.B. bei einem Copolycarbonat basierend auf Bisphenol A und Bisphenol TMC (1,1-Bis-(4-hydroxyphenyl)-3,3,5-trimethylcyclohexan)) gelingt es, die Wärmeformbeständigkeit weiter zu erhöhen. Diese Polycarbonate eignen sich daher auch zur Herstellung von Linsen, Reflektoren, Lampenabdeckungen und -gehäusen etc.

Neben einer guten Verarbeitbarkeit und guten mechanischen Eigenschaften müssen diese Materialien auch weiteren Anforderungen wie einer guten Oberflächenqualität im resultierenden Spritzgussteil sowie einer guten Metallhaftung genügen.

Je nach eingesetzten Bisphenolen und geeigneter Einstellung des Molekulargewichts der Homo- und Copolycarbonate lassen sich die Wärmeformbeständigkeit und die mechanischen Eigenschaften in einem weiten Bereich variieren. Jedoch ist die Metallhaftung dieser Polycarbonate häufig nicht optimal. Gerade im Bereich von Reflektoren ist eine gute Metallhaftung unabdingbar.

Zur Herstellung herkömmlicher Polycarbonate werden häufig monofunktionelle Verbindungen auf Phenolbasis wie z. B. Phenol, 4-Alkylphenole, wie z.B. p-tert. Butylphenol, und 4-Cumylphenol als Kettenabbrecher eingesetzt (Kunststoff-Handbuch 3; L. Bottenbruch, Hanser, München 1992, S. 127; EP-A 0 353 594).

Polyetherimid-haltige Polycarbonate sind in US-A 4,393,190 beschrieben. Diese modifizierten Polycarbonate weisen eine verbesserte Chemikalienbeständigkeit auf, die Eigenschaften bezüglich der Metallhaftung werden nicht erwähnt. Die hier beschriebenen Polycarbonate bzw. Copolycarbonate weisen ferner eine andere Zusammensetzung auf, verglichen mit den erfindungsgemäßen Copolycarbonaten.

In WO 00/37442 A1 werden Polycarbonate mit Imideinheiten beschrieben. Eine verbesserte Metallhaftung wird auch hier nicht erwähnt. Die hier beschriebenen Polycarbonate bzw. Copolycarbonate weisen ferner eine andere Zusammensetzung auf.

Nitro-funktionalisierte Polycarbonate zeigen nach JP-A 07179594 verbesserte Metallhaftungseigenschaften. Diese Polymere sind nicht Gegenstand dieser Anmeldung.

Polycarbonate mit Imideinheiten sind beispielsweise in US 6,214,505 beschrieben. Im Gegensatz dazu weisen die erfindungsgemäßen Polycarbonate jedoch eine andere Struktur auf. Auf die Oberflächeneigenschaften wird in US 6,214,505 nicht eingegangen.

In DE 3834660 A1 wird die Synthese von Etherimiden beschrieben. Auch diese sind strukturell anders aufgebaut als die hier beschriebenen erfindungsgemäßen Polycarbonate. Oberflächeneigenschaften werden nicht beschrieben.

Eine Plasmavorbehandlung kann u. U. die Oberflächeneigenschaften von Polymeren verändern. Diese Methoden sind z.B. bei Friedrich et al. in Metallized plastics 5&6: Fundamental and applied aspects und H. Grünwald et al. In Surface and Coatings Technologiy 111 (1999) 287-296 beschrieben. Eine Oberflächenbehandlung von Kunststoffen bedeutet jedoch einen erhöhten technischen Mehraufwand und kann ggf. zur Schädigung der Kunstoffoberfläche führen.

Der Auftrag von Metallen auf das Polymer kann über verschiedene Methoden wie z.B. durch Aufdampfen oder Sputtern geschehen. Die Verfahren sind näher beschrieben z.B. in "Vakuumbeschichtung Bd.1 bis 5", H. Frey, VDI-Verlag Düsseldorf 1995 oder "Oberflächen- und Dünnschicht-Technologie" Teil 1, R.A. Haefer, Springer Verlag 1987.

Ausgehend vom Stand der Technik stellte sich somit die Aufgabe Polycarbonate derart zu modifizieren, dass sie verbesserte Oberflächeneigenschaften, vor allem bezüglich der Haftung von Metallen aufweisen, ohne dass eine entsprechende Oberflächenvorbehandlung zwingend nötig wäre.

Außerdem ist es wünschenswert, dass die modifizierten Polycarbonate zu keinem nennenswerten Abbau unter thermischer Belastung wie z. B. im Extrusionsprozess oder im Spritzguss, aber auch im Herstellungsprozess bspw. nach dem Schmelzeumesterungsverfahren, führen, da diese Polycarbonate oder Copolycarbonate insbesondere bei hohen Umgebungstemperaturen eingesetzt werden - z.B. bei Reflektoren.

Es wurde nun gefunden, dass Homo- und Copolycarbonate bzw. Homo- und Cooligocarbonate (im Folgenden unter der Bezeichnung "Polycarbonat oder Polycarbonate" subsummiert), die mit Imid-haltigen Gruppen modifiziert sind, eine verbesserte Haftung zu Metallen aufweisen.

Aufgabe war es weiterhin, diese Imid-haltigen Endgruppen oder Monomerbausteine zur Verfügung zu stellen, welche sich in Polycarbonate einbauen lassen und zu Materialien mit verbesserten Oberflächeneigenschaften, insbesondere einer verbesserten Metallhaftung, führen. Zum Einbau der entsprechenden Imid-haltigen Endgruppen oder Monomere in Polycarbonat ist es erforderlich, dass diese phenolische OH-Gruppen tragen.

Diese Erfindung betrifft daher Polycarbonate die mit Imid-haltigen Gruppen, z.B. als Endgruppe oder Monomerbaustein, modifiziert sind.

Gegenstand der vorliegenden Erfindung sind daher Polycarbonate, die Strukturen auf Basis von Imid-haltigen-Phenolen oder Bisphenolen (im folgenden auch als Diphenole bezeichnet) enthalten, die Verwendung solcher Polycarbonate und Copolycarbonate zur Herstellung von Formteilen und die Verwendung von Imid-haltigen Phenolen als Kettenabbrecher oder Bisphenole bei der Herstellung von Polymeren, insbesondere von Polycarbonaten und Copolycarbonaten.

Gegenstand der Erfindung sind Polycarbonate enthaltend als Diphenolbaustein eine Verbindung der Struktur: (I) 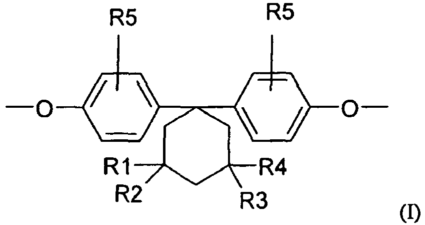 wobei
R1 bis R3 für Methyl stehen und R4 bis R5 für H stehen.
sowie mindestens eine der folgenden Strukturen (II), (III), (IV) und (V) 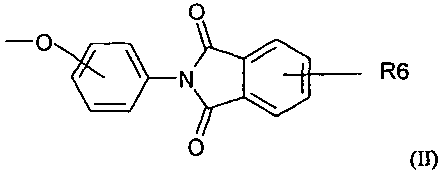 wobei R6 für H oder C1-C12 Alkyl, bevorzugt für H steht,
und 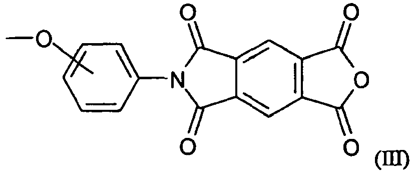 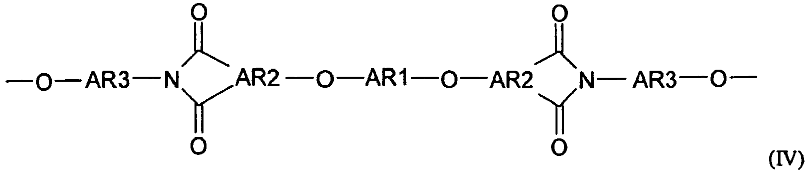 wobei -
AR1 - von 1,1-Bis-(4-hydroxyphenyl)-3,3,5-trimethyl cyclohexan (Bisphenol TMC) abgeleitet ist,
AR2 für einen gegebenenfalls substituierten trivalenten Arylrest, bevorzugt für einen trivalenten Phenyl- oder Naphthylrest, steht, der mit C1-C10 Alkyl und/oder Halogen, bevorzugt Methyl, Ethyl und/oder Halogen substituiert sein kann, und
AR3 für einen gegebenenfalls substituierten divalenten Arylrest, bevorzugt für einen divalenten Phenylrest, steht, der mit C1-C10 Alkyl, mit Hydroxy einfach oder mehrfach, bevorzugt 1- bis 5-fach substituiertes C1-C10-Alkyl und/oder Halogen substituiert sein kann, oder AR3 für Alkyl, bevorzugt mit 1 - 8 C-Atomen, besonders bevorzugt mit 1 - 4 C-Atomen, ganz besonders für Ethyl steht.
und 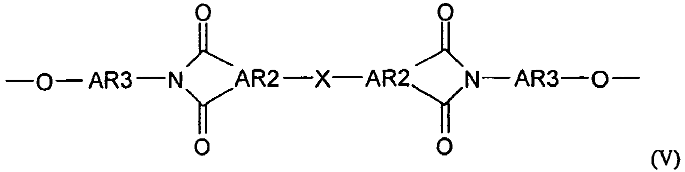 wobei AR2 und AR3 die oben genannten Bedeutungen haben und
X für O, S oder eine Einfachbindung, bevorzugt für Sauerstoff, steht.

Diese und weitere geeignete Diphenole sind z. B. in den US-A 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der französischen Patentschrift 1 561 518, in der Monographie "H. Schnell, Chemistry and Physics of Polycarbonates, Interscience Publishers, New York 1964, S. 28ff; S.102ff", und in "D.G. Legrand, J.T. Bendler, Handbook of Polycarbonate Science and Technology, Marcel Dekker New York 2000, S. 72ff." beschrieben.

Besonders bevorzugte Phenyl-Substituenten von AR3 in Formel IV und V sind Methyl-, Ethyl, Propyl, Butyl- sowie Hyroxymethyl , Hydroxyethyl, Hydroxypropyl oder Hydroxybutyl .

Als weitere Diphenolbausteine sind Diphenole der Formel (VIII) geeignet.Neben den oben genannten Diphenolen der Formel (I) bzw. davon abgeleitete Strukturen können für die Herstellung von erfindungsgemäßen Polycarbonaten weitere Diphenole der Formel (VIII) eingesetzt werden,

HO-Z-OH (VIII)

in welcher
Z ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (VIII) für einen Rest der Formel (VIIIa) 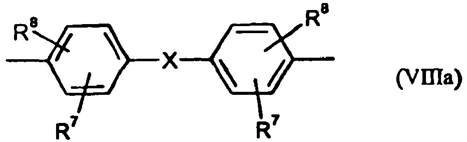 in der
- R⁷ und R⁸: unabhängig voneinander für H, C₁-C₁₈-Alkyl-, C₁-C₁₈-Alkoxy, Halogen wie Cl oder Br oder für jeweils gegebenenfalls substituiertes Aryl- oder Aralkyl, bevorzugt für H oder C₁-C₁₂-Alkyl, besonders bevorzugt für H oder C₁-C₈-Alkyl und ganz besonders bevorzugt für H oder Methyl stehen, und
- X: für eine Einfachbindung, -SO₂-, -CO-, -O-, -S-, C₁- bis C₆-Alkylen, C₂- bis C₅-Alkyliden oder C₅- bis C₆- Cycloalkyliden, welches mit C₁- bis C₆-Alkyl, vorzugsweise Methyl oder Ethyl substituiert sein kann, ferner für C₆- bis C₁₂-Arylen, welches gegebenenfalls mit weiteren Heteroatome enthaltenden aromatischen Ringen kondensiert sein kann, steht.
Bevorzugt steht X für eine Einfachbindung, C1 bis C5-Alkylen, C2 bis C5-Alkyliden, C5 bis C6-Cycloalkyliden, -O-, -SO-, -CO-, -S-, -SO2-,
oder ein für einen Rest der Formel (VIIIb) oder (VIIIc) 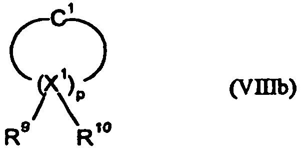 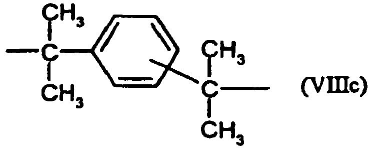 wobei
- R⁹ und R¹⁰: für jedes X¹ individuell wählbar, unabhängig voneinander Wasserstoff oder C₁-C₆-Alkyl, vorzugsweise Wasserstoff, Methyl oder Ethyl bedeuten.

Beispiele für Diphenole der Formel (VIII) sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole, sowie deren kernalkylierte und kernhalogenierte Verbindungen.

Für die Herstellung der Polycarbonate geeignete Diphenole der Formel (VIII) sind vorzugsweise Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren alkylierte, kernalkylierte und kernhalogenierte Verbindungen.

Besonders bevorzugte Diphenole sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Ganz besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Diese und weitere geeignete Diphenole sind z. B. in den US-A 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der franzosischen Patentschrift 1 561 518, in der Monographie "H. Schnell, Chemistry and Physics of Polycarbonates, Interscience Publishers, New York 1964, S. 28ff; S.102ff", und in "D.G. Legrand, J.T. Bendler, Handbook of Polycarbonate Science and Technology, Marcel Dekker New York 2000, S. 72ff." beschrieben.

Die Diphenole der Formel (VIII) können sowohl allein als auch im Gemisch miteinander verwendet werden..

Neben den Verbindungen der Struktur (I) enthalten die erfindungsgemäßen Polycarbonate als weiteren Diphenolbaustein gemäß Formel (VIII) insbesondere Bisphenol A.

Besonders bevorzugt ist die folgende Struktur der Formel (IVa): 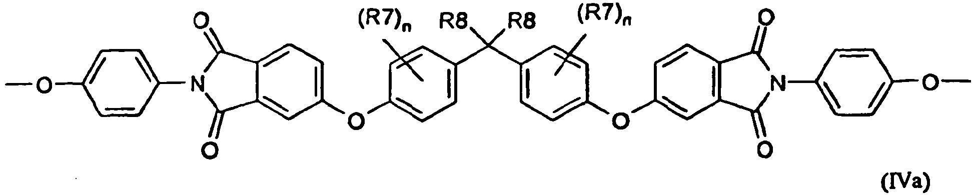 wobei
R7 unabhängig voneinander für C1-C6 Alkyl und/oder Halogen, bevorzugt für Methyl, Ethyl, n-Propyl, i-Propyl, Chlor und/oder Brom steht,
n für 0, 1, 2, 3 oder 4, bevorzugt für 0,1 oder 2 steht und
R8 unabhängig voneinander für C1-C10-Alkyl-, bevorzugt für C1-C6-Alkyl, insbesondere für Methyl oder Ethyl steht; beide R8 Reste können zusammen auch einen ggf. substituierten cyclischen Alkylrest bilden und bilden bevorzugt einen Cyclohexyl oder Trimethylcyclohexylrest.

Besonders bevorzugt ist ebenfalls die folgende Struktur der Formel (IVb):

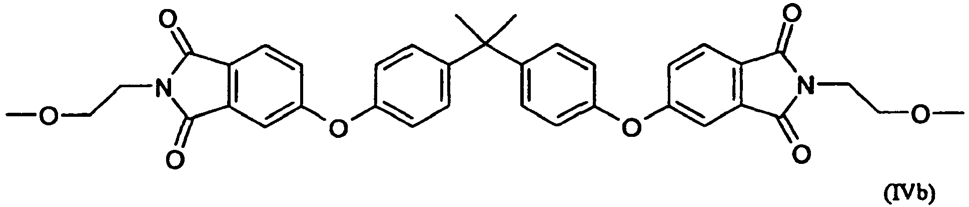

Die oben genannten Strukturen sind über Carbonateinheiten in der Polymerkette eingebaut.

Besonders bevorzugt sind 2 Gruppen von erfindungsgemäßen Polycarbonaten, die neben dem Diphenolbaustein der Formel (I) einerseits Strukturen der Formel (II) und/oder (III), besonders bevorzugt der Formel (II) enthalten, andererseits solche, die zusätzlich neben Diphenolen der Formel (I) Strukturen der Formel (IV) und/oder (V) enthalten.

Die oben aufgeführten allgemeinen oder in Vorzugsbereichen aufgeführten Restedefinitionen bzw. Erläuterungen können jedoch auch untereinander, also zwischen den jeweiligen Bereichen und Vorzugsbereichen beliebig kombiniert werden. Sie gelten für die Endprodukte sowie für die Vor- und Zwischenprodukte entsprechend.

Die Menge an einzusetzendem Kettenabbrecher der von entsprechenden Phenolen abgeleiteten Formeln (II) und/oder (III) bzw. die Menge der im Polycarbonat enthaltenen Strukturen der Formel (II) und /oder (III) beträgt 0,5 bis 8 Mol-%, bevorzugt 2 bis 6 Mol-%, bezogen auf Mole an jeweils eingesetztem Diphenol bzw. Diphenolen. Außer den phenolischen Verbindungen der Formeln (II) und/oder (III) können noch andere Phenole als Kettenabbrecher in Mengen bis zu 90 Mol%, vorzugsweise bis 75 Mol-%, insbesondere bis 70 Mol-%, bezogen auf die jeweilige Gesamtmenge an Kettenabbrecher zur Herstellung der Polycarbonat eingesetzt werden. Solche Phenole sind z.B. Phenol, Cumylphenol oder tert.-Butylphenol.

Falls von den Monomerbausteinen (IV) und (V) abgeleitete Diphenole verwendet werden, werden diese in Mengen von 5 - 50 Mol-% bevorzugt in Mengen von 10 - 30 Mol-% bezogen auf die Gesamtanzahl Mole eingesetzten Diphenols verwendet bzw. sind in diesen Mengen im Polycarbonat enthalten.

Die Menge an Diphenolen der Formel (I) kann im Allgemeinen von bis zu 95 mol%, bevorzugt 90 mol% Bisphenolen der Formel (VIII) ersetzt werden.

Die erfindungsgemäßen Verbindungen sind prinzipiell nach bekannten Methoden der organischen Chemie herstellbar. Beispielweise lassen sich die Imidfunktionalisierten Monophenole aus Aminophenolen und aromatischen Anhydriden herstellen. Dies ist z.B. in EP- A 132547 beschrieben.

Gemäß DE-A 2 119 799 erfolgt die Herstellung von Polycarbonaten unter Beteiligung phenolischer Endgruppen, nach dem Phasengrenzflächenverfahren wie auch dem Verfahren in homogener Phase.

Zur Herstellung von Polycarbonaten nach dem Phasengrenzflächenverfahren sei beispielhaft auf H. Schnell, Chemistry and Physics of Polycarbonates, Polymer Reviews, Vol. 9, Interscience Publishers, New York 1964 S. 33 ff. und auf Polymer Reviews, Vol. 10, "Condensation Polymers by Interfacial and Solution Methods", Paul W. Morgan, Interscience Publishers, New York 1965, Kap. VIII, S. 325 verwiesen.

Die Herstellung der erfindungsgemäßen Polycarbonate ist weiterhin auch aus Diarylcarbonaten und Diphenolen nach dem bekannten Polycarbonatverfahren in der Schmelze, dem sogenannten Schmelzumesterungsverfahren, möglich, das z. B. in WO-A 01/05866 und WO-A 01/05867 beschrieben ist. Daneben werden Umesterungsverfahren (Acetatverfahren und Phenylesterverfahren) beispielsweise in den US-A 34 94 885, 43 86 186, 46 61 580, 46 80 371 und 46 80 372, in den EP-A 26 120, 26 121, 26 684, 28 030, 39 845, 91 602, 97 970, 79 075, 14 68 87, 15 61 03, 23 49 13 und 24 03 01 sowie in den DE-A 14 95 626 und 22 32 977 beschrieben.

Diarylcarbonate sind solche Kohlensäurediester der Formel (VI) 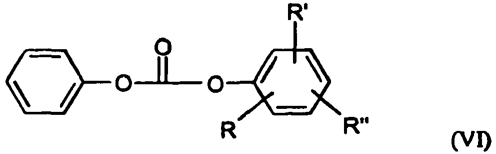 und Formel (VII), 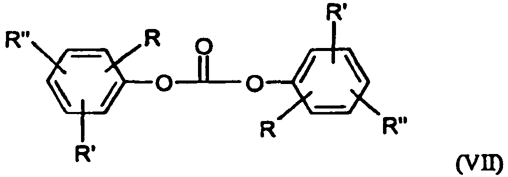 wobei R, R' und R" unabhängig voneinander H, gegebenenfalls verzweigte C1-C34-Alkyl/Cycloalkyl, C7-C34-Alkaryl oder C6-C34-Aryl bzw. C6-C34-Aryl-oxy darstellen können, beispielsweise Diphenylcarbonat, Butylphenyl-phenylcarbonat, Di-butylphenylcarbonat, Isobutylphenyl-phenylcarbonat, Di-isobutylphenylcarbonat, tert-Butylphenyl-phenylcarbonat, Di-tert-butylphenylcarbonat, n-Pentylphenyl-phenylcarbonat, Di-(n-pentylphenyl)carbonat, n-Hexylphenyl-phenylcarbonat, Di-(n-hexylphenyl)carbonat, Cyclohexylphenyl-phenylcarbonat, Di-cyclohexylphenylcarbonat, Phenylphenol-phenylcarbonat, Di-phenylphenolcarbonat, Isooctylphenyl-phenylcarbonat, Diisooctylphenylcarbonat, n-Nonylphenyl-phenylcarbonat, Di-(n-nonylphenylxarbonat, Cumylphenyl-phenylcarbonat, Di-cumylphenylcarbonat, Naphthylphenyl-phenylcarbonat, Di-naphthylphenylcarbonat, Di-tert-butylphenyl-phenylcarbonat, Di-(di-tert-butylphenyl)carbonat, Dicumylphenyl-phenylcarbonat, Di-(dicumylphenyl)carbonat, 4-Phenoxyphenyl-phenylcarbonat, Di-(4-phenoxyphenyl)carbonat, 3-Pentadecylphenyl-phenylcarbonat, Di-(3-pentadecylphenyl)carbonat, Tritylphenyl-phenylcarbonat, Di-tritylphenylcarbonat, bevorzugt Diphenylcarbonat, tert-Butylphenyl-phenylcarbonat, Di-tert-butylphenylcarbonat, Phenylphenol-phenylcarbonat, Di-phenylphenolcarbonat, Cumylphenyl-phenylcarbonat, Di-cumylphenylcarbonat, besonders bevorzugt Diphenylcarbonat.

Zusätzlich zu den oben genannten Diphenolen der Formel (VIII) können auch Verbindungen mit drei oder mehr phenolischen Hydroxygruppen eingesetzt werden. Man erhält auf diese Weise verzweigte Polycarboante.

Einige der verwendbaren Verbindungen mit drei oder mehr als drei phenolischen Hydroxygruppen sind beispielsweise Phloroglucin, 4,6-Dimethyl-2,4,6-tri-(4-hydroxyphenyl)-hepten-2, 4,6-Dimethyl-2,4,6-tri-4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol, Tetra-(4-hydroxyphenyl)-methan, Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die aromatischen Polycarbonate der vorliegenden Erfindung besitzen Zahlenmittelmolekulargewichte Mn (ermittelt durch Gelpermeations-Chromatographie (GPC) und Eichung mit Polycarbonat) von 500 bis 500.000, vorzugsweise von 500 bis 100.000, besonders bevorzugt von 1.000 bis 100.000, ganz besonders bevorzugt von 5.000 bis 40.000 und insbesondere ganz besonders bevorzugt von 6.000 bis 20.000.

Im Falle, dass die erfindungsgemäßen Polycarbonate Molekulargewichte im Oligomerenbereich aufweisen (im Folgenden mit Oligocarbonaten bezeichnet) weisen diese Oligocarbonate mittlere Molekulargewichte (Mₙ, Zahlenmittel) von 500 bis 5.000, bevorzugt von 700 bis 4.000 (ermittelt durch Gelpermeationschromatographie (GPC) und Eichung mit Polycarbonat).

Gegenstand der Erfindung sind weiterhin thermoplastische Zusammensetzungen enthaltend erfindungsgemäße Oligocarbonate, bevorzugt in einer Menge von > 0 bis zu 20 Gew%, bevorzugt bis zu 10, insbesondere 1 bis 10, ganz besonders bevorzugt 2 bis 10 Gew. %. Bevorzugt enthalten die Zusammensetzungen erfindungsgemäße Oligocarbonate und Polycarbonate A, die aus einem oder mehreren Diphenolen, bestehend aus Verbindungen der Formel (VIII), insbesondere Bisphenol A, Bisphenol TMC oder Mischungen hieraus, aufgebaut sind.

Die Polycarbonate (A) weisen bevorzugt mittlere Molekulargewichte M_{w} (Gewichtsmittel) von 15.000 bis 80.000 g/mol, besonders bevorzugt 18.000 bis 60.000 g/mol, insbesondere 22.000 bis 40.000 g/mol (ermittelt durch Gelpermeations-Chromatographie (GPC) und Eichung mit Polycarbonat).

Im Falle des Phasengrenzflächenpolykondensationsverfahrens können die Kettenabbrecher der Formel (II) und/oder (III) als entsprechende Hydroxyverbindung vor, während oder nach der Phosgenierung in Lösung zugesetzt werden. Die für das Lösen der Kettenabbrecher der Formel II oder III geeigneten Lösungsmittel sind beispielsweise Methylenchlorid, Chlorbenzol, THF oder Acetonitril sowie Mischungen dieser Lösungsmittel.

Im Falle des Schmelzeumesterungsverfahren besteht nach dem erfindungsgemäßen Verfahren die Möglichkeit, die Kettenabbrecher der Formel (II) und/oder (III) (jeweils als entsprechende Hydroxyverbindung) zu jedem Zeitpunkt der Reaktion zuzugeben; dabei kann die Zugabe in mehrere Portionen aufgeteilt werden

Diphenole zur Herstellung der erfindungsgemäßen Polycarbonate können auch Polymerisate oder Kondensate mit phenolischen Endgruppen sein, so dass erfindungsgemäß auch Polycarbonate bzw. Copolycarbonate mit Blockstrukturen einbezogen sind.

Die erfindungsgemäßen Polycarbonate können in bekannter Weise aufgearbeitet und zu beliebigen Formkörpern verarbeitet werden, beispielsweise durch Extrusion oder Spritzguss.

Den erfindungsgemäßen Polycarbonaten können noch andere aromatische Polycarbonate und/oder andere aromatische Polyestercarbonate und/oder andere aromatische Polyester in bekannter Weise zugemischt werden.

Den erfindungsgemäßen Polycarbonaten können noch die für diese Thermoplasten üblichen Additive wie Füllstoffe, UV-Stabilisatoren, IR-Stabilisatoren, Thermostabilisatoren, Antistatika und Pigmente in den üblichen Mengen zugesetzt werden; gegebenenfalls können das Entformungsverhalten, das Fließverhalten, und/oder die Flammwidrigkeit noch durch Zusatz externer Entformungsmittel, Fließmittel, und/oder Flammschutzmittel verbessert werden (z. B. Alkyl- und Arylphosphite, - phosphate, -phosphane, -niedermolekulare Carbonsäureester, Halogenverbindungen, Salze, Kreide, Quarzmehl, Glas- und Kohlenstofffasern, Pigmente und deren Kombination. Solche Verbindungen werden z. B. in WO 99/55772, S. 15 - 25, und in "Plastics Additives", R. Gächter und H. Müller, Hanser Publishers 1983, beschrieben).

Geeignete Additive sind beispielsweise beschrieben in "Additives for Plastics Handbook, John Murphy, Elsevier, Oxford 1999", im "Plastics Additives Handbook, Hans Zweifel, Hanser, München 2001".

Geeignete Antioxidantien bzw. Thermostabilisatoren sind beispielsweise:

Alkylierte Monophenole, Alkylthiomethylphenole, Hydrochinone und alkylierte Hydrochinone, Tocopherole, Hydroxylierte Thiodiphenylether, Alkylidenbisphenole, O-, N- und S-Benzylverbindungen, Hydroxybenzylierte Malonate, Aromatische Hydroxybenzylverbindungen, Triazinverbindungen, Acylaminophenole, Ester von β-(3,5-Di-tert-butyl-4-hydroxyphenyl)propionsäure, Ester von β-(5-tert-Butyl-4-hydroxy-3-methylphenyl)propionsäure, Ester von β-(3,5-Dicyclohexyl-4-hydroxyphenyl)propionsäure, Ester von 3,5-Di-tert-butyl-4-hydroxyphenylessigsäure, Amide of β-(3,5-Di-tert-butyl-4-hydroxyphenyl)propionsäure, geeignete Thiosynergisten, sekundäre Antioxidantien, Phosphite und Phosphonite, Benzofuranone und Indolinone.

Bevorzugt sind organische Phosphite, Phosphonate und Phosphane, meist solche bei denen die organischen Reste völlig oder teilweise aus gegebenenfalls substituierten aromatischen Resten bestehen.

Als Komplexierungsmittel für Schwermetalle und zur Neutralisation von Alkalispuren sind o/m Phosphorsäuren, ganz oder teilweise veresterte Phosphate oder Phosphite geeignet.

Als-Lichtschutzmittel (UV-Absorber) sind geeignet 2-(2'-Hydroxyphenyl)benzotriazole, 2-Hydroxybenzophenone, Ester von substituierten und unsubstituierten Benzoesäuren, Acrylate, Sterisch gehinderte Amine, Oxamide sowie 2-(Hydroxyphenyl)-1,3,5-triazine bzw substituierte Hydroxyalkoxyphenyl-1,3,5-triazole, bevorzugt sind substituierte Benzotriazole wie z.B. 2-(2'-hydroxy-5'-methyl-phenyl)-benzotriazole, 2-(2'-hydroxy-3',5'-di-t-butyl-phenyl)benzotriazole, 2-(2'-hydroxy-3'-tert.-butyl-5'-methyl-phenyl)-5-chlorobenzotriazole, 2-(2'-hydroxy-3',5'-tert.-butylphenyl)-5-chlorobenzotriazole, 2-(2'-hydroxy-5'-tert.-octylphenyl)benzotriazole, 2-(2'-hydroxy-3',5'-di-tert.-amylphenyl)benzotriazole, 2-[2'-hydroxy-3'-(3",4",5",6"-tetrahydrophthalimido-ethyl)-5'-methylphenyl]-benzotriazole and 2,2'-methylenebis [4-(1,1,3,3-tetramethylbutyl)-6-(2H-benzotriazole-2-yl)phenol].

Polypropylenglykole allein oder in Kombination mit z. B. Sulfonen oder Sulfonamiden als Stabilisatoren können gegen die Schädigung durch Gamma-Strahlen verwendet werden.

Diese und andere Stabilisatoren können einzeln oder in Kombinationen verwendet werden und in den genannten Formen dem Polymer zugesetzt werden.

Außerdem können Verarbeitungshilfsmittel wie Entformungsmittel, meist Derivate langkettiger Fettsäuren, zugesetzt werden. Bevorzugt sind z. B. Pentaerythrittetrastearat und Glycerinmonostearat. Sie werden allein oder im Gemisch vorzugsweise in einer Menge von 0,01 bis 1 Gew.-%, bezogen auf die Masse der Zusammensetzung eingesetzt.

Geeignete flammhemmende Additive sind Phosphatester, d. h. Triphenylphosphat, Resorcindiphosphorsäureester, bromhaltige Verbindungen, wie bromierte Phosphorsäureester, bromierte Oligocarbonate und Polycarbonate, sowie bevorzugt Salze fluorierter organischer Sulfonsäuren.

Geeignete Schlagzähmacher sind Butadienkautschuk mit aufgepfropftem Styrol-Acrylnitril oder Methylmethacrylat, Ethylen-Propylen-Kautschuke mit aufgepfropftem Maleinsäureanhydrid, Ethyl- und Butylacrylatkautschuke mit aufgepfropftem Methylmethacrylat oder Styrol-Acrylnitril, interpenetrierende Siloxan- und Acrylat-Netzwerke mit aufgepfropftem Methylmethacrylat oder Styrol-Acrylnitril.

Des weiteren können Farbmittel, wie organische Farbstoffe oder Pigmente oder anorganische Pigmente, IR-Absorber, einzeln, im Gemisch oder auch in Kombination mit Stabilisatoren, Glasfasern, Glas(hohl)kugeln, anorganischen Füllstoffen zugesetzt werden.

Die erfindungsgemäßen Polycarbonate gegebenenfalls in Abmischung mit anderen Thermoplasten und/oder üblichen Additiven können zu beliebigen Formkörpem/Extrudaten verarbeitet und überall dort eingesetzt werden, wo bereits bekannte Polycarbonate und Copolycarbonate eingesetzt werden.

Aufgrund ihres Eigenschaftsprofils eignen sich die erfindungsgemäßen Polycarbonate als Substratmaterialien für Platten, Stegplatten, Verglasungen, Streuscheiben, Lampenabdeckungen oder optische Datenspeicher, wie Audio-CD, CD-R(W), DVD, DVD-R(W) etc., sind aber auch beispielsweise als Folien im Elektrosektor als Formteile im Fahrzeugbau und als Platten für Abdeckungen im Sicherheitsbereich einsetzbar. Weitere mögliche Anwendungen der erfindungsgemäßen Polycarbonate sind:
Sicherheitsscheiben, die bekanntlich in vielen Bereichen von Gebäuden, Fahrzeugen und Flugzeugen erforderlich sind, sowie als Schilde von Helmen.
Herstellung von Folien, insbesondere Skifolien.
Herstellung von Blaskörpern (siehe beispielsweise US-Patent 2 964 794), beispielsweise 1 bis 5 Gallon Wasserflaschen.
Herstellung von lichtdurchlässigen Platten, insbesondere von Hohlkammerplatten, beispielsweise zum Abdecken von Gebäuden wie Bahnhöfen, Gewächshäusern und Beleuchtungsanlagen.
Herstellung optischer Datenspeicher.
Zur Herstellung von Ampelgehäusen oder Verkehrsschildern.
Zur Herstellung von Schaumstoffen (siehe beispielsweise DE-B 1 031 507).
Zur Herstellung von Fäden und Drähten (siehe beispielsweise DE-B 1 137 167 und DE-A 1 785 137).
Als transluzente Kunststoffe mit einem Gehalt an Glasfasern für lichttechnische Zwecke (siehe beispielsweise DE-A 1 554 020).
Als transluzente Kunststoffe mit einem Gehalt an Bariumsulfat, Titandioxid und oder Zirkoniumoxid bzw. organischen polymeren Acrylatkautschuken (EP-A 634 445, EP-A 269 324) zur Herstellung von lichtdurchlässigen und lichtstreuenden Formteilen.
Zur Herstellung von Präzisionsspritzgußteilchen, wie beispielsweise Linsenhalterungen. Hierzu verwendet man Polycarbonate mit einem Gehalt an Glasfasern, die gegebenenfalls zusätzlich etwa 1 - 10 Gew.-% MoS2, bezogen auf Gesamtgewicht, enthalten.
Zur Herstellung optischer Geräteteile, insbesondere Linsen für Foto- und Filmkameras (siehe beispielsweise DE-A 2 701 173).
Als Lichtübertragungsträger, insbesondere als Lichtleiterkabel (siehe beispielsweise EP-A 0 089 801).
Als Elektroisolierstoffe für elektrische Leiter und für Steckergehäuse sowie Steckverbinder.
Herstellung von Mobiltelefongehäusen mit verbesserter Beständigkeit gegenüber Parfüm, Rasierwasser und Hautschweiß.
Network interface devices
Als Trägermaterial für organische Fotoleiter.
Zur Herstellung von Leuchten, z. B. Scheinwerferlampen, als sogenannte "head-lamps", Streulichtscheiben oder innere Linsen.
Für medizinische Anwendungen, z. B. Oxygenatoren, Dialysatoren.
Für Lebensmittelanwendungen, wie z. B. Flaschen, Geschirr und Schokoladenformen.
Für Anwendungen im Automobilbereich, wo Kontakt zu Kraftstoffen und Schmiermitteln auftreten kann, wie beispielsweise Stoßfänger ggf. in Form geeigneter Blends mit ABS oder geeigneten Kautschuken.
Für Sportartikel, wie z. B. Slalomstangen oder Skischuhschnallen.
Für Haushaltsartikel, wie z. B. Küchenspülen und Briefkastengehäuse.
Für Gehäuse, wie z. B. Elektroverteilerschränke.
Gehäuse für Elektrozahnbürsten und Föngehäuse
Transparente Waschmaschinen - Bullaugen mit verbesserter Beständigkeit gegenüber der Waschlösung.
Schutzbrillen, optische Korrekturbrillen.
Lampenabdeckungen für Kücheneinrichtungen mit verbesserter Beständigkeit gegenüber Küchendunst insbesondere Öldämpfen.
Verpackungsfolien für Arzneimittel.
Chip-Boxen und Chip-Träger
Für sonstige Anwendungen, wie z. B. Stallmasttüren oder Tierkäfige.

Die Formkörper und Extrudate erhältlich aus den erfindungsgemäßen Polymeren sind ebenfalls Gegenstand dieser Anmeldung.

### Beispiele

Zur Untersuchung der Metallisierungseigenschaften wurden Spritzguss-Rechteckplatten mit den Maßen 155 x 75 x 2,3 mm angefertigt. Die Massetemperatur betrug 300 °C und die Werkzeugtemperatur 100 °C. Das jeweilige Granulat wurde vor Verarbeitung für 5 Stunden im Vakuumtrockenschrank bei 120 °C getrocknet.

### Metallisierungsprozess:

Die Prüfkörper wurden, bevor sie in die Vakuumkammer eingebracht wurden, mit ionisierter Luft abgeblasen, um sie von Staub zu befreien. Danach wurde die Vakuumkammer mit den Prüfkörper auf einen Druck p ≤ 1 · 10⁻⁵ mbar evakuiert. Anschließend wurde Ar-Gas bis zu einem Druck von 5 · 10⁻³ mbar eingelassen. Mittels Sputtern via DC-Magnetron wurde eine Aluminium-Schicht von 200 nm Dicke mit einer Leistungsdichte von 2,9 W/cm² auf die Proben aufgebracht. Die Proben befanden auf einem Probenteller, der sich während der Beschichtung mit 20 U/min drehte. Die Sputterzeit betrug 12,5 min.

### Metallhaftungstest:

Nach der Metallisierung wurden die Prüfkörper aus der Vakuumkammer entnommen und innerhalb einer Stunde mit Klebeband (Hersteller: 3M 853, Breite 19 mm) beklebt. Nach 24 Stunden wurde das Klebeband unter einem Abzugswinkel von 180° und einer Abzugsgeschwindigkeit von V=100mm/min mit Hilfe einer Zug-Dehnungs-Maschine (Instron 5566) abgezogen.

Ziel war es nun, die Aluminiumschicht rückstandsfrei vom Substrat abzuziehen, um eine quantitative Aussage über die Haftung des Aluminiums zum Substrat treffen zu können. Es wurde daher die Kraft bestimmt, die zum Abziehen des Klebebandes benötigt wird. Die Abzugskraft wurde auf die Breite des Klebebandes dividiert, um eine Abzugskraft unabhängig von der Breite des Klebebandes zu erhalten.

### Beispiel 1 (Herstellung eines erfindungsgemäßen Kettenabbrechers)

### N-(4-Hydroxyphenyl)phthalimid

In einem Rundkolben werden 360 g (2,43 mol) Phthalsäureanhydrid in 1,2 l DMF (Dimethylformamid) vorgelegt. 264 g (2,42 mol) Aminophenol werden langsam zu dieser Mischung gegeben. Es wird 8 Stunden bei 140 °C gerührt. Über einen Kolonnenkopf wird während dieser Zeit Wasser abdestilliert. Man lässt auf Raumtemperatur abkühlen und saugt den ausgefallenen Feststoff ab. Der Feststoff wird zuerst mit Wasser dann mit Ethanol gewaschen und anschließend im Vakuum getrocknet. Man erhält 445 g eines beige-farbigen Feststoffs.
¹H-NMR (400 MHz; DMSO): δ = 7.98 - 7.85 (m, 4 H); 7,20 (d, 2 H), 6.89 (d, 2 H).

### Beispiel 2 Herstellung des erfindungsgemäßen Polycarbonats

Zu einer mit Stickstoff inertisierten Lösung von 1096 g (4,8 mol) Bisphenol A, 2235 g (7,2 mol) 1,1-Bis-(4-hydroxyphenyl)-3,3,5-trimethylcyclohexan und 2112 g (52,8 mol) Natriumhydroxid in 40 l Wasser werden 40 l Methylenchlorid hinzugegeben. Bei einem pH-Wert von 12.5 - 13.5 und 20 °C leitet man 2374 g (24 mol) Phosgen ein. Um den pH-Wert nicht unter 12,5 fallen zu lassen, wurde während der Phosgenierung 30 %-ige Natronlauge zugegeben. Nach beendeter Phosgenierung und Spülung mit Stickstoff gibt man 172 g (0,6 mol) Kettenabbrecher aus Beispiel 1 gelöst in einem Gemisch aus 2 l Methylenchlorid und 0.3 l THF (Tetrahydrofuran) hinzu und lässt 15 Minuten Rühren. Man rührt für weitere 15 Minuten und gibt 13,6 g (0.12 mol) N-Ethylpiperidin zu und lässt 1 Stunde nachrühren. Die organische Phase wird nach Abtrennen der wässrigen Phase mit Phosphorsäure angesäuert und mit destilliertem Wasser neutral und salzfrei gewaschen. Nach Lösungsmittelaustausch gegen Chlorbenzol wird das Produkt bei 295 °C und 80 Umdrehungen/min bei 0,1 mbar über einen Ausdampfextruder extrudiert und über einen Granulator granuliert. Man erhält 2870 g eines transparenten Granulats. Das Molekulargewicht des Polycarbonatharzes beträgt Mn = 6900 g/mol (Zahlenmittel des Molekulargewichts bestimmt bei Raumtemperatur über Gelpermeations-Chromatographie kalibriert auf BPA-Polycarbonat mit Brechungsindexdetektor).
Metallhaftungstest: Der Abzugskraft betrug 4,8 mN/mm

### Beispiel 3 (Herstellung eines erfindungsgemäßen Kettenabbrechers)

### N-(3-Hydroxyphenyl)phthalimid

In einem Rundkolben werden 452 g (3,0 mol) Phthalsäureanhydrid in 1,6 l DMF (Dimethylformamid) vorgelegt. 334 g (3,0 mol) 3-Aminophenol werden langsam zu dieser Mischung gegeben. Es wird 8 Stunden bei 140 °C gerührt. Über einen Kolonnenkopf wird während dieser Zeit Wasser abdestilliert. Man lässt auf Raumtemperatur abkühlen und saugt den ausgefallenen Feststoff ab. Der Feststoff wird zuerst mit Wasser dann mit Ethanol gewaschen und anschließend im Vakuum getrocknet. Man erhält 650 g eines beigen Feststoffs.
¹H-NMR (400 MHz; DMSO): δ = 7,85-7,95 (m, 4 H); 7,28 (m, 1 H); 6,85 (m, 3 H).

### Beispiel 4 (Herstellung eines erfindungsgemäßen Polycarbonats)

Zu einer mit Stickstoff inertisierten Lösung von 1278,4 g (5,6 mol) Bisphenol A, 2607,7 g (8,4 mol) 1,1-Bis-(4-hydroxyphenyl)-3,3,5-trimethylcyclohexan und 2464 g (61,6 mol) Natriumhydroxid in 401 Wasser werden 40 l Methylenchlorid hinzugegeben. Bei einem pH-Wert von 12.5 - 13.5 und 20 °C leitet man 2769 g (28 mol) Phosgen ein. Um den pH-Wert nicht unter 12,5 fallen zu lassen, wurde während der Phosgenierung 30 %-ige Natronlauge zugegeben. Nach beendeter Phosgenierung und Spülung mit Stickstoff gibt man 201 g (0,8 mol) Kettenabbrecher aus Beispiel 3 gelöst in einem Gemisch aus 1,5 l Methylenchlorid und 0.8 l THF (Tetrahydrofuran) hinzu und lässt 15 Minuten Rühren. Man rührt für weitere 15 Minuten und gibt 15,8 g (0.14 mol) N-Ethylpiperidin zu und lässt 1 Stunde nachrühren. Die organische Phase wird nach Abtrennen der wässrigen Phase mit Phosphorsäure angesäuert und mit destilliertem Wasser neutral und salzfrei gewaschen. Nach Lösungsmittelaustausch gegen Chlorbenzol wird das Produkt bei 295 °C und 80 Umdrehungen/min bei 0,1 mbar über einen Ausdampfextruder extrudiert und über einen Granulator granuliert. Man erhält 3,30 kg eines transparenten Granulats. Das Molekulargewicht des Polycarbonatharzes beträgt Mn = 7300 g/mol (Zahlenmittel bestimmt bei Raumtemperatur über Gelpermeations-Chromatographie kalibriert auf BPA-Polycarbonat mit Brechungsindexdetektor)
Metallhaftungstest: Die Abzugskraft betrug 6,8 mN/mm

### Beispiel 5 (Vergleichsbeispiel; Polycarbonat ohne Imideinheiten)

Zu einer mit Stickstoff inertisierten Lösung von 1155 g (5,1 mol) Bisphenol A, 2345 g (7,6 mol) 1,1-Bis-(4-hydroxyphenyl)-3,3,5-trimethylcyclohexan und 2220 g (55,5 mol) Natriumhydroxid in 40 l Wasser werden 40 l Methylenchlorid hinzugegeben. Bei einem pH-Wert von 12.5 - 13.5 und 20 °C leitet man 2495 g (25,2 mol) Phosgen ein. Um den pH-Wert nicht unter 12,5 fallen zu lassen, wurde während der Phosgenierung 30 %-ige Natronlauge zugegeben. Nach beendeter Phosgenierung und Spülung mit Stickstoff gibt man 60 g (0,6 mol) Phenol gelöst in 1 1 Methylenchlorid hinzu und lässt 15 Minuten Rühren. Man rührt für weitere 15 Minuten und gibt 14,4 g (0.1 mol) N-Ethylpiperidin zu und lässt 1 Stunde nachrühren. Die organische Phase wird nach Abtrennen der wässrigen Phase mit Phosphorsäure angesäuert und mit destilliertem Wasser neutral und salzfrei gewaschen. Nach Lösungsmittelaustausch gegen Chlorbenzol wird das Produkt bei 330 °C und 80 Umdrehungen/min bei 0,1 mbar über einen Ausdampfextruder extrudiert und über einen Granulator granuliert. Man erhält 2870 g eines transparenten Granulats. Das Molekulargewicht des Polycarbonatharzes beträgt Mn = 7600 g/mol (Zahlenmittel des Molekulargewichts bestimmt bei Raumtemperatur über Gelpermeations-Chromatographie kalibriert auf BPA-Polycarbonat mit Brechungsindexdetektor).
Metallhaftungstest: Die Abzugskraft betrug 3,7 mN/mm
Die Metallhaftungseigenschaften der erfindungsgemäßen Polycarbonate (Beispiel 2 und Beispiel 4) sind gegenüber dem herkömmlichen Polycarbonat (Vergleichsbeispiel 5) deutlich erhöht (um ca. 30 bzw. 80 %), da eine größere Abzugskraft erforderlich ist, um die Beschichtung zu entfernen.

### Beispiel 6 (Herstellung eines erfindungsgemäßen Imid-funktionalisierten Monomers)

### 5,5'-[(1-Methylethyliden)bis(4,1-phenylenoxy)]bis[2-(4-hydroxyphenyl)-1H-isoindol-1,3(2H)-dion]

In einem 3 1 Dreihalskolben mit Rücklaufteiler, Rückflußkühler und Destillationsbrücke werden 247,2 g 4,4'-(4,4'-Isopropylidendiphenoxy)-bis-(phthalsäureanhydrid) (0,47 mol) werden in 200 ml DMF gelöst. 105,8 g 4-Aminophenol (0,095 mol) werden langsam hinzugetropft. Der Ansatz wird 2 Stunden unter Rückfluss gekocht. Dabei wird kontinuierlich Wasser abdestilliert. Dann wird der Ansatz abgekühlt, mit 500 ml Dichlormethan verdünnt und 2 x mit Wasser gewaschen. Abschließend wird mit gesättigter NaCl-Lösung gewaschen. Die organische Phase wird eingeengt und der Rückstand in 300 ml Methanol aufgekocht. Der Rückstand wird nach dem Abkühlen abgesaugt und mit 200 ml Methanol nachgewaschen.
¹H-NMR (400 MHz; DMSO): δ = 9.75 (s, 2H); 8.05 (m, 2 H); 7.30-7.45 (m, 8H); 7.10-7.20 (m, 8H); 6.85 (m, 4H).

### Beispiel 7 (Herstellung eines erfindungsgemäßen Polycarbonats)

Zu einer mit Stickstoff inertisierten Lösung von 1097 g (4,8 mol) Bisphenol A, 1541 g (5,0 mol) 1,1-Bis-(4-hydroxyphenyl)-3,3,5-trimethylcyclohexan und 477 g (0,68 mol) des Imid-funktionalisierten Bisphenols aus Beispiel 6 sowie 1839 g (46,0 mol) Natriumhydroxid in 40 l Wasser werden 40 l Methylenchlorid hinzugegeben. Bei einem pH-Wert von 12.5 - 13.5 und 20 °C leitet man 2067 g (20,9 mol) Phosgen ein. Um den pH-Wert nicht unter 12,5 fallen zu lassen, wurde während der Phosgenierung 30 %-ige Natronlauge zugegeben. Nach beendeter Phosgenierung und Spülung mit Stickstoff gibt man 59 g (0,6 mol) Phenol gelöst in 1 1 Dichlormethan hinzu und lässt 15 Minuten Rühren. Man rührt für weitere 15 Minuten und gibt 11,8 g (0.10 mol) N-Ethylpiperidin zu und lässt 1 Stunde nachrühren. Die organische Phase wird nach Abtrennen der wässrigen Phase mit Phosphorsäure angesäuert und mit destilliertem Wasser neutral und salzfrei gewaschen. Nach Lösungsmittelaustausch gegen Chlorbenzol wird das Produkt bei 305 °C und 136 Umdrehungen/min bei 0,02 mbar über einen Ausdampfextruder extrudiert und über einen Granulator granuliert. Man erhält ein transparentes leicht gelblich gefärbtes Granulat. Das Molekulargewicht des Polycarbonatharzes beträgt Mn = 12.800 g/mol (Zahlenmittel bestimmt bei Raumtemperatur über Gelpermeations-Chromatographie kalibriert auf BPA-Polycarbonat mit Brechungsindexdetektor).
Metallhaftungstest: Die Abzugskraft betrug 7,2 mN/mm

### Beispiel 8 (Vergleichsbeispiel, Synthese eines Imid-haltigen Bisphenols)

### N,N'-Bis(p-hydroxyphenyl)-1,2,4,5-benzoltetracarbonsäure 1,2,4,5-diimid

In einem 2 l 4-Halsrundkolben mit aufgesetztem Rückflußkühler und Rückflußkolonne werden unter Argon 112 g (0,5 mol) Benzol-1,2,4,5-tetracarbonsäuredianhydrid in 1,2 l DMF vorlegt. Es werden 122 g (1,1 mol) 4-Aminophenol hinzugeben. Die Mischung wird für 6 Stunden unter Rückfluss gekocht.

Wenn die exotherme Reaktion beendet ist, wird die Temperatur vorsichtig auf 80°C erhöht. Dabei wird Wasser kontinuierlich dem Reaktionsgemisch entzogen.

Das Rohprodukt wird abfiltriert und mit 2 x mit jeweils 500 ml Methanol nachgewaschen. Das Produkt wird im Vakuum getrocknet. Man erhält 179 g eines gelben Feststoffs.
¹H-NMR (400 MHz; DMSO): δ = 8.30 (s, 2 H) 7.27 (d, 4 H); 6.91 (d, 4 H).

### Beispiel 9 (Vergleichsbeispiel, Herstellung eines Polycarbonats mit Imideinheiten)

Zu einer mit Stickstoff inertisierten Lösung von 911 g (3,99 mol) Bisphenol A, 1695 g (5,46 mol) 1,1-Bis-(4-hydroxyphenyl)-3,3,5-trimethylcyclohexan und 421 g (1,05 mol) des Imid-funktionalisierten Bisphenols aus Beispiel 8 sowie 1884 g (46,20 mol) Natriumhydroxid in 40 l Wasser werden 40 l Methylenchlorid hinzugegeben. Bei einem pH-Wert von 12.5 - 13.5 und 20 °C leitet man 2077 g (21,0 mol) Phosgen ein. Um den pH-Wert nicht unter 12,5 fallen zu lassen, wurde während der Phosgenierung 30 %-ige Natronlauge zugegeben. Nach beendeter Phosgenierung und Spülung mit Stickstoff gibt man 31.6 g (0,33 mol) Phenol gelöst in 1 1 Dichlormethan hinzu und lässt 15 Minuten Rühren. Man rührt für weitere 15 Minuten und gibt 11,9 g (0.11 mol) N-Ethylpiperidin zu und lässt 1 Stunde nachrühren. Die organische Phase wird nach Abtrennen der wässrigen Phase mit Phosphorsäure angesäuert und mit destilliertem Wasser neutral und salzfrei gewaschen. Nach Lösungsmittelaustausch gegen Chlorbenzol wird das Produkt bei 330 °C und 80 Umdrehungen/min bei 0,1 mbar über einen Ausdampfextruder extrudiert und über einen Granulator granuliert. Man erhält 3305 g eines transparenten Granulats. Das Molekulargewicht des Polycarbonatharzes beträgt Mn = 13.500 g/mol (Zahlenmittel bestimmt bei Raumtemperatur über Gelpermeations-Chromatographie kalibriert auf BPA-Polycarbonat mit Brechungsindexdetektor).

### Metallhaftungstest: Die Abzugskraft betrug 4,2 mN/mm

Überraschenderweise führt die Verwendung des nicht erfindungsgemäßen Imid-haltigen Monomers aus Beispiel 8 nur zu einem geringen Anstieg in der Metallhaftung, bezogen auf die eingesetzte Menge Imid. Obwohl eine im Vergleich zu Beispiel 2 höhere Menge an Imid-modifiziertem Monomer eingesetzt wurde, ist der Anstieg in der Haftungskraft nur gering.

## Patentansprüche

1. Polycarbonate enthaltend als Diphenolbaustein eine Verbindung abgeleitet von 1,1-Bis-(4-hydroxyphenyl)-3,3,5-trimethylcyclohexan (Bisphenol TMC) der Struktur (Ia) 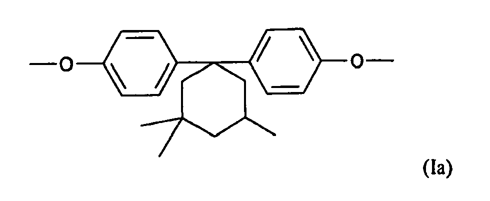 sowie mindestens eine der folgenden Strukturen (II), (III), (IV) und (V) 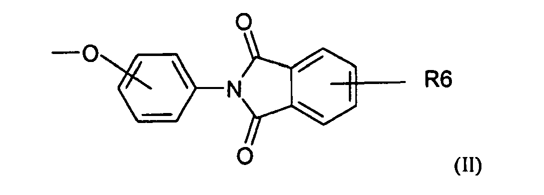 wobei R6 für H oder C₁-C₁₂ Alkyl steht,
und 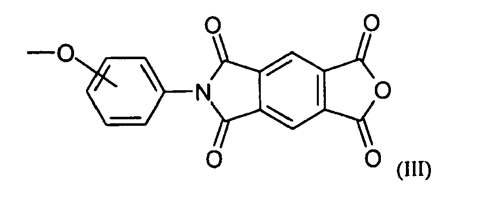 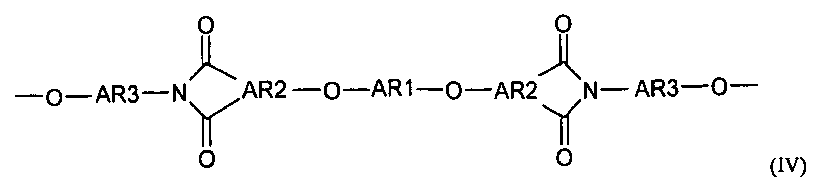 wobei
AR1 vom Diphenol 1,1-Bis-(4-hydroxyphenyl)-3,3,5-trimethylcyclohexan (Bisphenol TMC) abgeleitet ist,
AR2 für einen gegebenenfalls substituierten trivalenten Arylrest und
AR3 für einen gegebenenfalls substituierten divalenten Arylrest steht, der mit C₁-C₁₀ Alkyl, mit Hydroxy einfaches oder mehrfach substituiertes C₁-C₁₀-Alkyl und/oder Halogen substituiert sein kann,
und 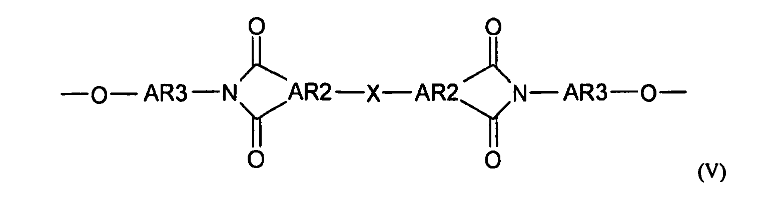 wobei AR2 und AR3 die oben genannten Bedeutungen haben und
X für O, S oder eine Einfachbindung steht.

2. Polycarbonate gemäß Anspruch 1, worin
AR2 für trivalentes Phenyl oder Naphtyl steht, die mit C₁-C₁₀-Alkyl und/oder Halogen substituiert sein kann,
AR3 für divalentes Phenyl, das mit C₁-C₁₀-Alkyl, mit Hydroxy einfach oder mehrfach substituiertes C₁-C₁₀-Alkyl und/oder Halogen substituiert sein kann, oder für Alkyl mit 1 bis 8 C-Atomen steht.

3. Polycarbonate gemäß Anspruch 1, worin
AR2 für trivalentes Phenyl, das mit Methyl, Ehtyl und/oder Halogen substituiert sein kann, steht,
AR3 für divalentes Phenyl, das mit Methly, Ethyl, Hydroxymethyl, Hydroxyethyl und/oder Halogen substituiert sein kann, oder für Ethyl steht,
X für Sauerstoff steht,
R6 für Wasserstoff.

4. Polycarbonate gemäß Anspruch 1, die ein Molekulargewicht (Zahlenmittel) von 500 bis 500.000 aufweisen.

5. Polycarbonate gemäß Anspruch 1, die ein Molekulargewicht (Zahlenmittel) von 500 bis 5.000 aufweisen.

6. Polycarbonate gemäß Anspruch 1, die ein Molekulargewicht (Zahlenmittel) von 1.000 bis 5.000 aufweisen.

7. Polycarbonate gemäß Anspruch 1, enthaltend 0,5 bis 8 Mol% (bezogen auf Mole an jeweils eingesetztem Diphenol) mindestens eine Struktur der Formeln (II) und (III) und 5 - 50 Mol% (bezogen auf die Gesamtanzahl Mole eingesetzten Diphenols) an Struktur der Formel (IV).

8. Zusammensetzungen enthaltend Polycarbonate gemäß Anspruch 1.

9. Zusammensetzungen gemäß Anspruch 8, enthaltend Polycarbonate gemäß Anspruch 1 und Polycarbonate (A) aufgebaut aus Diphenolen bestehend aus Verbindungen der Formel (VIII)
HO-Z-OH (VIII)
in welcher
Z für einen Rest der Formel (VIIIa) 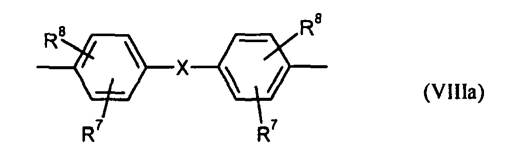 in der
R⁷ und R⁸ unabhängig voneinander für H, C₁-C₁₈-Alkyl-, C₁-C₁₈-Alkoxy, Halogen oder für jeweils gegebenenfalls substituiertes Aryl- oder Aralkyl stehen,
X für eine Einfachbindung, -SO₂-, -CO-, -O-, -S-, C₁- bis C₆-Alkylen, C₂- bis C₅-Alkyliden oder C₅- bis C₆- Cycloalkyliden, welches mit C₁- bis C₆-Alkyl substituiert sein kann, ferner für C₆- bis C₁₂-Arylen, welches gegebenenfalls mit weiteren Heteroatome enthaltenden aromatischen Ringen kondensiert sein kann, steht.

10. Zusammensetzung gemäß Anspruch 9, worin Diphenole der Formel (VIII) ausgewählt sind aus Bisphenol TMC, Bisphenol A oder Mischungen hieraus.

11. Verwendung von Polycarbonaten gemäß Anspruch 1 zur Herstellung von Formteilen.

12. Formteile, erhältlich aus Polycarbonaten gemäß Anspruch 1.

13. Verwendung von Zusammensetzungen gemäß Anspruch 8 zur Herstellung von Formteilen.

14. Formteile erhältlich aus Zusammensetzungen gemäß Anspruch 8.

## Claims

1. Polycarbonates comprising, as diphenol unit, a compound derived from 1,1-bis-(4-hydroxyphenyl)-3,3,5-trimethylcyclohexane (Bisphenol TMC) of the structure: (Ia) 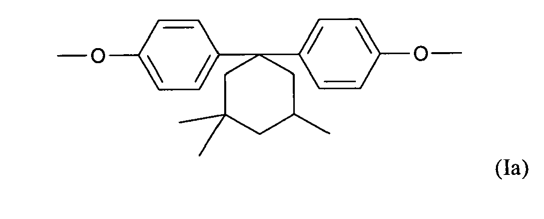 and also comprising at least one of the following structures (II), (III), (IV) and (V) 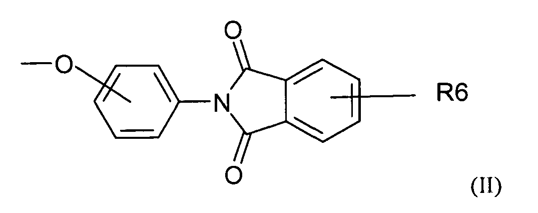 where R6 is H or C₁-C₁₂-alkyl,
and 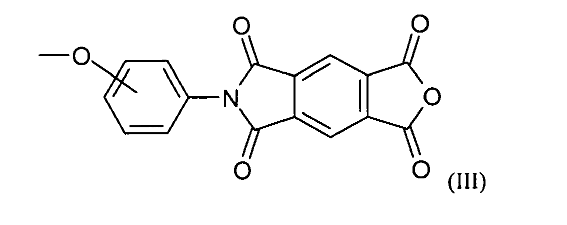 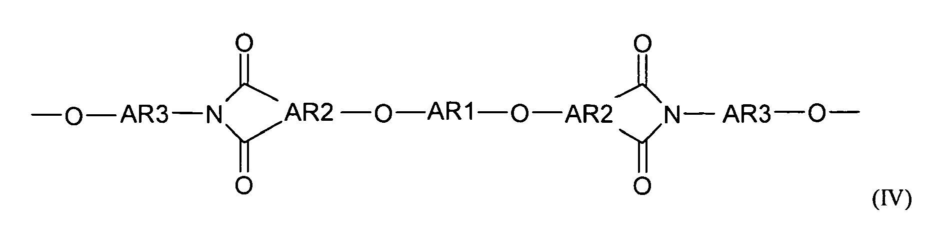 where
AR1 is derived from 1,1-bis-(4-hydroxyphenyl)-3,3,5-trimethylcyclohexane (Bisphenol TMC),
AR2 is an unsubstituted or substituted trivalent aryl moiety and
AR3 is an unsubstituted or substituted divalent aryl moiety which can have substitution by C₁-C₁₀-alkyl, by C₁-C₁₀-alkyl having one or more hydroxy substituents, and/or by halogen,
and 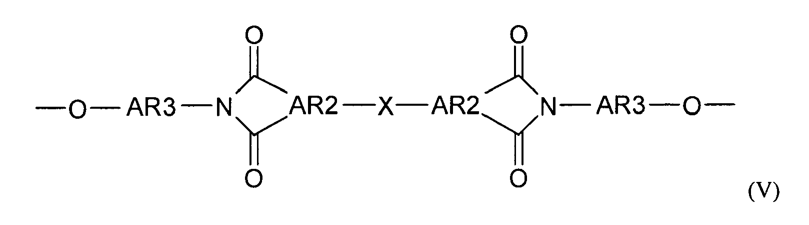 where AR2 and AR3 are defined as above and
X is O, S or a single bond.

2. Polycarbonates according to Claim 1, in which
AR2 is trivalent phenyl or naphthyl, which can have substitution by C₁-C₁₀-alkyl and/or by halogen,
AR3 is divalent phenyl, which can have substitution by C₁-C₁₀-alkyl, by C₁-C₁₀-alkyl having one or more hydroxy substituents and/or by halogen, or is alkyl having from 1 to 8 carbon atoms.

3. Polycarbonates according to Claim 1, in which
AR2 is trivalent phenyl, which can have substitution by methyl, by ethyl and/or by halogen,
AR3 is divalent phenyl which can have substitution by methyl, by ethyl, by hydroxymethyl, by hydroxyethyl and/or by halogen, or is ethyl,
X is oxygen,
R6 is hydrogen.

4. Polycarbonates according to Claim 1, which have a molecular weight (number average) of from 500 to 500 000.

5. Polycarbonates according to Claim 1, which have a molecular weight (number average) of from 500 to 5000.

6. Polycarbonates according to Claim 1, which have a molecular weight (number average) of from 1000 to 5000.

7. Polycarbonates according to Claim 1 comprising from 0.5 to 8 mol% (based on one mole of the particular diphenol used) of at least one structure of the formulae (II) and (III) and from 5 to 50 mol% (based on the total number of moles of diphenol used) of structure of the formula (IV).

8. Compositions comprising polycarbonates according to Claim 1.

9. Compositions according to Claim 8, comprising polycarbonates according to Claim 1 and polycarbonates (A) composed of diphenols composed of compounds of the formula (VIII)
HO-Z-OH (VIII)
in which
Z is a moiety of the formula (VIIIa) 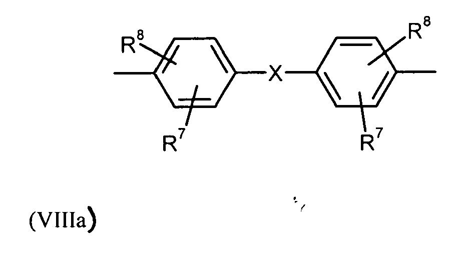 in which
R⁷ and R⁸ independently of one another are H, C₁-C₁₈-alkyl, C₁-C₁₈-alkoxy, halogen or respectively unsubstituted or substituted aryl or aralkyl,
X is a single bond, -SO₂-, -CO-, -O-, -S-, C₁-C₆-alkylene, C₂-C₅-alkylidene or C₅-C₆-cycloalkylidene which can have substitution by C₁-C₆-alkyl, or is C₆-C₁₂-arylene which can, if appropriate, have been condensed with further aromatic rings comprising heteroatoms.

10. Composition according to Claim 9, in which diphenols of the formula (VIII) have been selected from bisphenol TMC, bisphenol A and mixtures thereof.

11. Use of polycarbonates according to Claim 1 for the production of mouldings.

12. Mouldings obtainable from polycarbonates according to Claim 1.

13. Use of compositions according to Claim 8 for the production of mouldings.

14. Mouldings obtainable from compositions according to Claim 8.

## Revendications

1. Polycarbonates contenant comme élément diphénol un composé derivé du 1,1-bis-(4-hydroxyphenyl)-3,3,5-trimethyl-cyclohexane (Bisphenol TMC) de structure : (Ia) 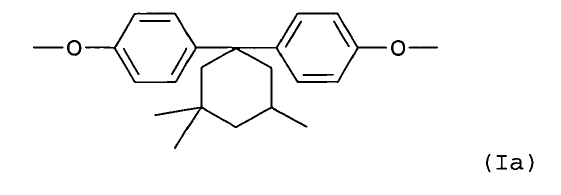 ainsi qu'au moins une des structures suivantes (II), (III), (IV) et (V) 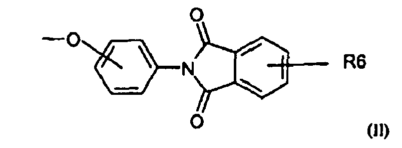 R6 représentant H ou C₁-C₁₂ alkyle, et 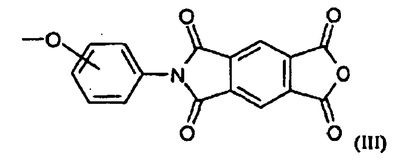 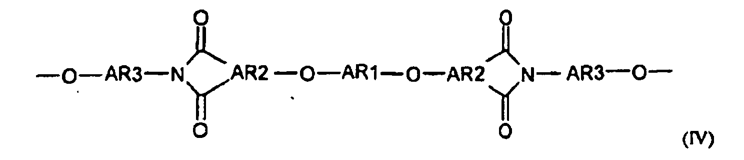 où
AR1 est dérivé du diphenol 1,1-bis-(4-hydroxyphenyl)-3,3,5-trimethylcyclohexane (Bisphenol TMC)
AR2 représente un radical aryle trivalent le cas échéant substitué et
AR3 représente un radical aryle divalent le cas échéant substitué, qui peut être substitué par C₁-C₁₀-alkyle, par C₁-C₁₀-alkyle monosubstitué ou polysubstitué par hydroxy et/ou halogène, et 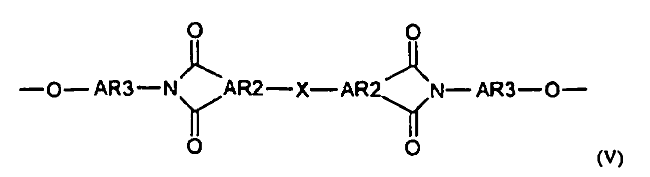
AR2 et AR3 ayant les significations susmentionnées, et
X représente O, S ou une simple liaison.

2. Polycarbonates selon la revendication 1, dans lesquels
AR2 représente phényle ou naphtyle trivalent, qui peut être substitué par C₁-C₁₀-alkyle et/ou halogène,
AR3 représente phényle divalent, qui peut être substitué par C₁-C₁₀-alkyle, par C₁-C₁₀-alkyle monosubstitué ou polysubstitué par hydroxy et/ou par halogène, ou représente alkyle comprenant 1 à 8 atomes de carbone.

3. Polycarbonates selon la revendication 1, dans lesquels
AR2 représente phényle trivalent, qui peut être substitué par méthyle, éthyle et/ou halogène,
AR3 représente phényle divalent, qui peut être substitué par méthyle, éthyle, hydroxyméthyle, hydroxyéthyle et/ou halogène, ou représente éthyle,
X représente oxygène,
R6 représente hydrogène.

4. Polycarbonates selon la revendication 1, qui présentent un poids moléculaire (moyenne numérique) de 500 à 500 000.

5. Polycarbonates selon la revendication 1, qui présentent un poids moléculaire (moyenne numérique) de 500 à 5000.

6. Polycarbonates selon la revendication 1, qui présentent un poids moléculaire (moyenne numérique) de 1000 à 5000.

7. Polycarbonates selon la revendication 1, contenant 0,5 à 8% en mole (par rapport aux moles de diphénol à chaque fois utilisé) d'au moins une structure des formules (II) et (III) et 5-50% en mole (par rapport au nombre total de moles de diphénol utilisé) de structure de formule (IV).

8. Compositions contenant des polycarbonates selon la revendication 1.

9. Compositions selon la revendication 8, contenant des polycarbonates selon la revendication 1 et des polycarbonates (A) formés à partir de diphénols constitués de composés de formule (VIII)
HO-Z-OH (VIII)
dans laquelle
Z représente un radical de formule (VIIIa) 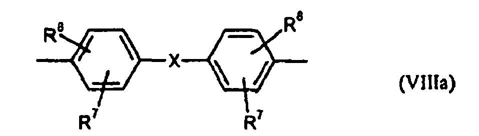 où
R⁷ et R⁸ représentent, indépendamment l'un de l'autre, H, C₁-C₁₈-alkyle, C₁-C₁₈-alcoxy, halogène ; ou aryle ou aralkyle à chaque fois le cas échéant substitué,
X représente une simple liaison, -SO₂-, -CO-, -O-, -S-, C₁-C₆-alkylène, C₂-C₅-alkylidène ou C₅-C₆-cycloalkylidène, qui peut être substitué par C₁-C₆-alkyle, en outre C₆-C₁₂-arylène, qui peut le cas échéant être condensé avec d'autres cycles aromatiques contenant des hétéroatomes.

10. Composition selon la revendication 9, dans laquelle les diphénols de formule (VIII) sont choisis parmi le bisphénol TMC, le bisphénol A ou leurs mélanges.

11. Utilisation de polycarbonates selon la revendication 1 pour la fabrication de pièces façonnées.

12. Pièces façonnées pouvant être obtenues à partir de polycarbonates selon la revendication 1.

13. Utilisation de compositions selon la revendication 8 pour la fabrication de pièces façonnées.

14. Pièces façonnées pouvant être obtenues à partir de compositions selon la revendication 8.
